# EUROPEAN PATENT SPECIFICATION

(11) **EP 3 228 907 B1**
(45) Date of publication and mention of the grant of the patent: **18.11.2020**
(21) Application number: 15865795.7
(22) Date of filing: 27.11.2015
(51) Int. Cl.: F16J 15/34

(54) **MECHANICAL SEAL APPARATUS**
MECHANISCHE DICHTUNGSVORRICHTUNG
DISPOSITIF DE GARNITURE MÉCANIQUE D'ÉTANCHÉITÉ

(30) Priority: 01.12.2014 JP 2014243129
(43) Date of publication of application: 11.10.2017
(73) Proprietor: Eagle Industry Co., Ltd., Minato-ku Tokyo 105-8587 (JP)
(72) Inventor: NAKAHARA Nobuo, Tokyo 105-8587 (JP); MATSUBARA, Ryo, Kariya-shi, Aichi 448048 (JP); KATO, Takayuki, Kariya-shi, Aichi 448048 (JP); FUKANUMA, Tetsuhiko, Kariya-shi, Aichi 448048 (JP)
(74) Representative: Seifert, Ruth
(86) International application number: PCT/JP2015/083321
(87) International publication number: WO 2016/088659

(56) References cited:
- EP-A1- 1 213 516
- WO-A1-2007/055156
- GB-A- 1 515 760
- US-A- 4 548 547
- US-A1- 2010 201 074
- US-A1- 2010 201 074
- US-B1- 6 322 079

## Description

### {TECHNICAL FIELD}

The present invention relates to a mechanical seal device that seals a fluid via sealing faces of a rotating ring and a stationary ring.

### {BACKGROUND ART}

A mechanical seal device is installed and used between a housing and a rotation shaft arranged so as to pass through the housing.

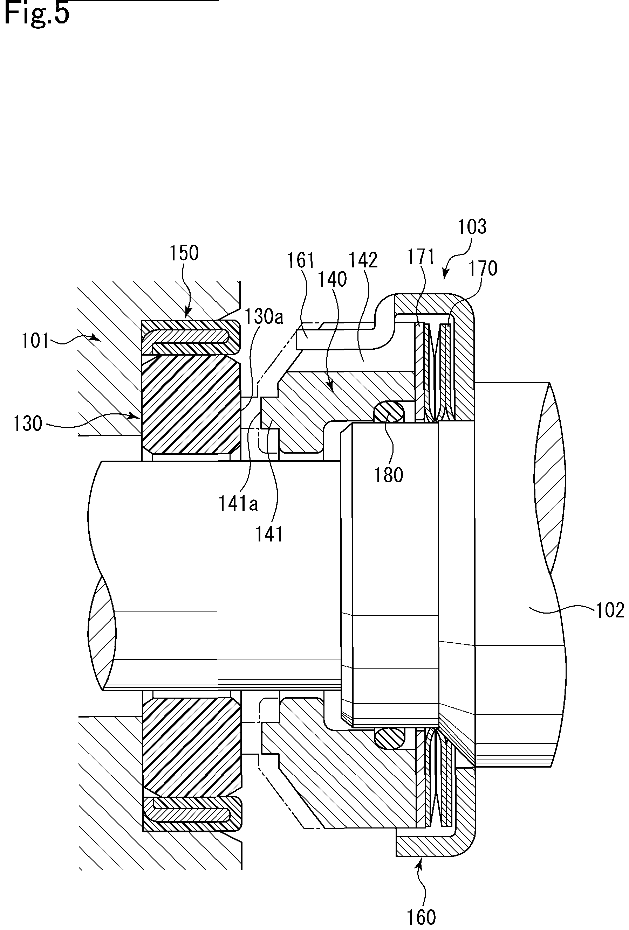

A representative mechanical seal device 103 is shown in FIG. 5. This mechanical seal device 103 has a mating ring 130 serving as a stationary side sealing ring installed in a housing 101 in a non-rotation state, and a seal ring 140 serving as a rotation side sealing ring installed on the side of a rotation shaft 102, the seal ring to be rotated integrally with this shaft 102. The mating ring 130 is fixed to the housing 101 via a gasket 150. The mechanical seal device 103 also has a case 160, a coiled wave spring 170, and an O ring 180 as configurations for fitting the seal ring 140 to the rotation shaft 102. The mating ring 130 and the seal ring 140 are arranged so as to face each other in the axial direction of the rotation shaft 102. In a use state (part of the seal ring 140 is shown by a broken line in FIG. 5), by closely attaching facing end faces 130a, 141a of the rings to each other, a sealed fluid is sealed (Patent Citation 1).

The seal ring 140 is axially movably fitted to an outer peripheral face of the rotation shaft 102 via the O ring 180. A sealing projection 141 projecting in the direction of the mating ring 130 is formed on an end face of the seal ring 140 on the side of the mating ring 130, and the end face 141a of the sealing projection 141 is slidably and closely attached to the sealing face 130a of the mating ring 130.

The case 160 is arranged on the back face side of a spring holder 171. The case 160 is fixed to the rotation shaft 102 immovably in the axial direction and the rotating direction. Between the spring holder 171 and the case 160, the coiled wave spring 170 is interposed in a state where the coiled wave spring 170 is appropriately compressed in the axial direction. In a use state, the seal ring 140 is thereby biased in the direction of the mating ring 130 via the spring holder 171. In an outer peripheral part of the case 160, a plurality of engagement claws 161 extending in the axial direction is formed at equal intervals, and is engaged with engagement cutouts 142 similarly formed on an outer peripheral face of the seal ring 140 at equal intervals. Thereby, the seal ring 140 is installed in the rotation shaft 102 in a state where the seal ring is movable in the axial direction of the rotation shaft 102 and in a state where the seal ring is immovable in the circumferential direction (rotating direction) of the rotation shaft 102 (state where the seal ring is integrally rotated).

With such a configuration, in a use state, in accordance with rotation of the rotation shaft 102, the sealing face 130a of the mating ring 130 and the sealing face 141a on a leading end of the sealing projection 141 of the seal ring 140 slide on each other in a closely attached state, and the sealing face 130a of the mating ring 130 and the sealing face 141a of the seal ring 140 are brought into surface contact with each other, so that the sealed fluid is sealed.

EP 1 213 516 A1 discloses a high pressure seal which comprises a stationary sealing ring and a second ring which rotates with the shaft. These have faces which are pressed against each other by a spring. A mounting ring surrounding the sealing ring has a seating for the spring and a second seating for the rotating ring. A first O-ring is positioned between a wall of the shaft housing and the stationary sealing ring and a second O-ring between the shaft and the rotating sealing ring. The mounting ring and spring are stationary and the first O-ring is enclosed by the stationary ring.

US 2010/201074 A1 discloses a gas seal for aerospace engines which has a stationary seal housing, a rotating seal plate mounted on the engine drive shaft and a carbon ring seal movably supported in the housing with a face which mates with the face of the seal plate to create a gas seal therebetween. A plurality of flexible pins have first ends supported on the housing and second ends slidably connected with the carbon ring seal to permit the latter to shift axially. A plurality of compression springs bias the two seal faces together. The housing has a first twist lock which selectively engages a second twist lock on the carbon ring seal to movably retain the latter in the housing. The second ends of the spring pins resiliently deflect during mutual rotation of the carbon ring seal and the housing to facilitate engagement and disengagement of the first and second twist locks.

### {CITATION LIST}

### {Patent Literature}

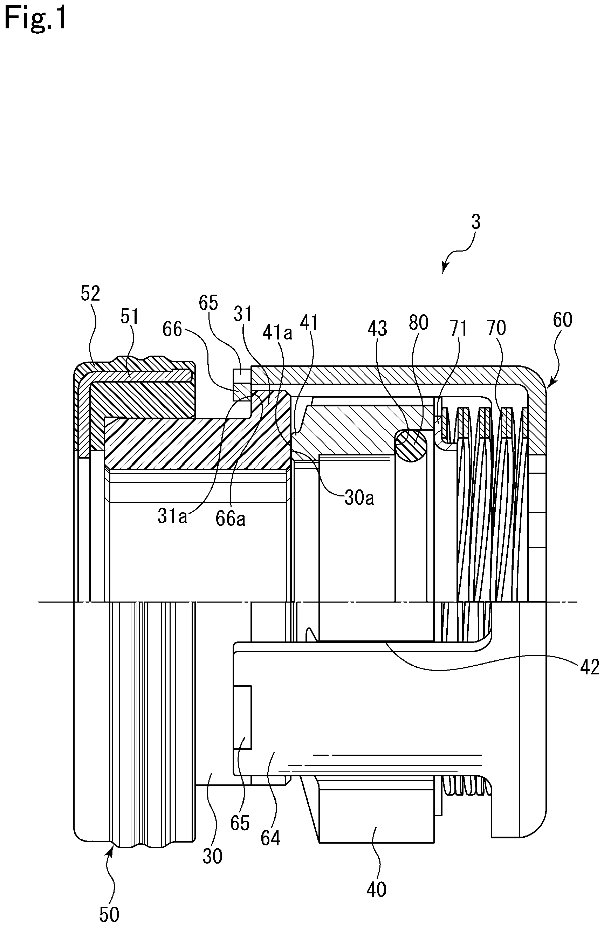

Patent Citation 1: International Publication No. 2008/129950 ({0016}-{0026}, FIG. 1)

### {SUMMARY OF INVENTION}

### {Technical Problem}

However, in Patent Citation 1 described above, the mating ring 130 and the seal ring 140 are separate members to be handled respectively individually. Thus, at the time of attaching the mechanical seal device 103 to devices such as the rotation shaft 102 and the housing 101, there is a fear that grit and dust come into a part between the sealing face 130a of the mating ring 130 and the sealing face 141a of the seal ring 140. Even when the sealing face 130a of the mating ring 130 and the sealing face 141a of the seal ring 140 are kept in a state where the sealing faces are in contact with each other before the mechanical seal device is installed in the equipment, there is a fear that a gap is generated between the sealing face 130a of the mating ring 130 and the sealing face 141a of the seal ring 140 at the time of installing the mechanical seal device in the equipment and grit and dust come into the gap. Including the time of assembling, considerable care is required for handling those members.

The present invention is achieved focusing on such problems, and an objective thereof is to provide a mechanical seal device capable of suppressing intrusion of grit and dust into a part between a sealing face of a mating ring and a sealing face of a seal ring as far as possible.

### {Solution to Problem}

In order to achieve the foregoing objective, a mechanical seal device of the present invention is defined in claim 1.

According to this aspect, by engaging the flange of the mating ring with the case having the resilient member inside, not only in a use state where the mechanical seal device is installed in the equipment but also in a pre-use state before the mechanical seal device is installed in the equipment, the axially perpendicular sealing faces of both the rings are in contact with each other with pressure based on resilient force of the resilient member. Thus, grit and dust coming into a part between the sealing face of the mating ring and the sealing face of the seal ring can be suppressed as far as possible. By forming the flange, a surface area is increased, so that an area in contact with the fluid can be increased. Thus, an effect of cooling the mating ring is enhanced.

The mechanical seal device is characterized in that the case has a guide piece projecting on the side of the mating ring in the axial direction, the seal ring has a cutout on an outer face, and by engaging the guide piece with the cutout, the seal ring is incapable of being relatively rotated with respect to the case.

According to this aspect, the case is presented from relatively rotating with respect to the seal ring and is also used as a means for engaging with the mating ring. Thus, the part can be commonly used.

The mechanical seal device is characterized in that the guide piece has an engagement portion projecting in the radial direction, and is resiliently held by engaging the engagement portion with the flange of the mating ring.

According to this aspect, only by moving the case upon receiving connection of a rotation shaft, the mating ring and the engagement portion can be easily disengaged.

The mechanical seal device is characterized in that in the flange, a cutout having such width that the engagement portion is capable of passing through is formed in a circumferential direction of the flange.

According to this aspect, the flange and the engagement portion are detachably engaged with each other by so-called bayonet engagement, and the mating ring and the seal ring can be assembled into a resilient state by a simple procedure. By forming the cutout in the flange, the surrounding fluid is circulated, and by providing the cutout, the surface area is increased. Thus, the effect of cooling the mating ring can be enhanced.

The mechanical seal device is characterized in that when the case is connected to a rotation shaft, the flange and the case are disengaged from each other.

According to this aspect, the resilient member used in a use state is also used as a resilient member that holds the axially perpendicular sealing faces of both the rings in contact with each other in a pre-use state before the mechanical seal device is installed in the equipment. Thus, the parts can be commonly used.

### {BRIEF DESCRIPTION OF DRAWINGS}

FIG. 1 is a front view showing a mechanical seal device held at holding length in a pre-use state (holding state) before the mechanical seal device is installed in the equipment in a first embodiment, the view including a cross sectional view in part;
FIG. 2 is a front view showing the mechanical seal device held at use length in a use state where the mechanical seal device is installed in the equipment in the first embodiment, the view including a cross sectional view in part;
FIG. 3 is a perspective view showing a mating ring of the first embodiment;
FIG. 4 is a perspective view showing a case of the first embodiment; and
FIG. 5 is a sectional view of a conventional mechanical seal device in the middle of attachment to devices.

### {DESCRIPTION OF EMBODIMENTS}

Modes for implementing a mechanical seal device according to the present invention will be described based on an embodiment below. In the present embodiment, a rotating type mechanical seal device applied to an automobile air conditioning compressor that seals a carbon dioxide gas (CO2) serving as a coolant will be described.

### FIRST EMBODIMENT

The mechanical seal device according to a first embodiment will be described with reference to FIGS. 1 to 4. Hereinafter, the left, right, upper, and lower sides on a paper plane of FIG. 1 will be referred to as the left, right, upper, and lower sides, respectively, of the mechanical seal device in the following description.

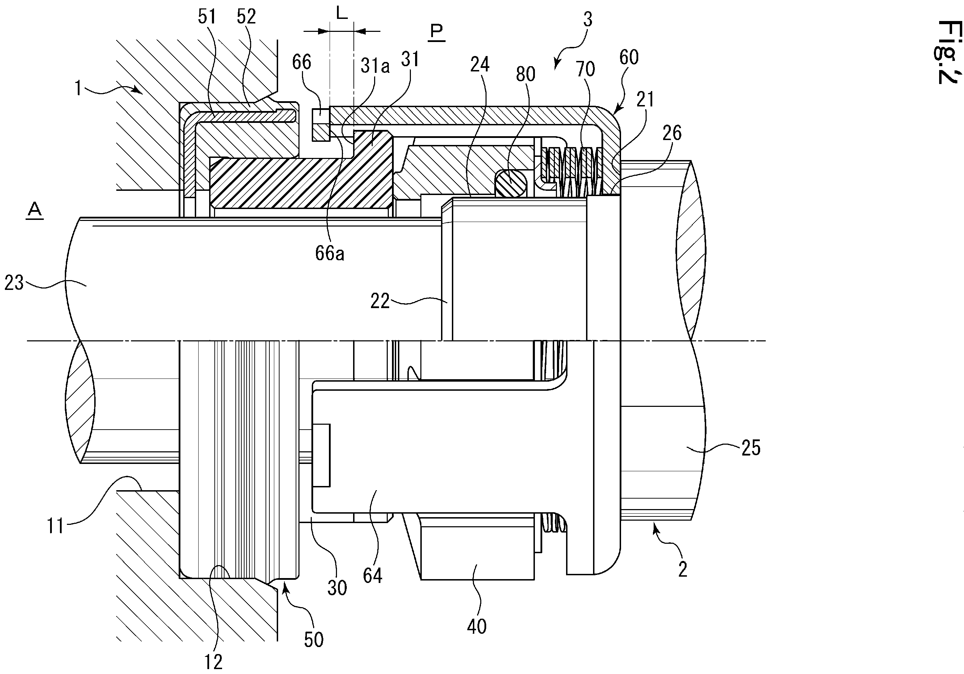

As shown in FIGS. 1 and 2, a mechanical seal device 3 is installed between a housing 1 (equipment) of a compressor (equipment), and a shaft 2 (equipment, rotation shaft) arranged so as to pass through an axial hole 11 of the housing 1 and communicate with an interior (equipment interior side) of the compressor and an exterior (atmosphere side). To the shaft 2, drive force from a crankshaft of an engine is transmitted via a mechanism such as an electromagnetic clutch (not shown) on the atmosphere side. Thereby, the shaft 2 is rotated so as to drive mechanisms in the interior (equipment interior side) of the compressor.

The mechanical seal device 3 has a mating ring 30 serving as a stationary side sealing ring installed in the housing 1 in a non-rotation state, and a seal ring 40 serving as a rotation side sealing ring installed on the side of the shaft 2, the seal ring to be rotated integrally with this shaft 2. The mechanical seal device 3 also has a case 60, a coiled wave spring 70 (resilient member), a spring holder 71, and an O ring 80 as configurations for fitting the seal ring 40 to the shaft 2.

The mating ring 30 and the seal ring 40 are arranged so as to face each other in the axial direction of the shaft 2. By closely attaching sealing faces 30a, 41a serving as end faces of the rings to each other, a sealed fluid is sealed. That is, the sealed fluid on the equipment interior side is sealed so as not to leak and flow out to the atmosphere side.

A space on the outer peripheral side of the sealing faces 30a, 41a on the right side of the housing 1 is an equipment interior side space P to be filled with a carbon dioxide gas (CO2) serving as the sealed fluid. A space ranging from the inner peripheral side of the sealing faces 30a, 41a to the left side of the housing 1 is an atmosphere side (equipment exterior side) space A (FIG. 2).

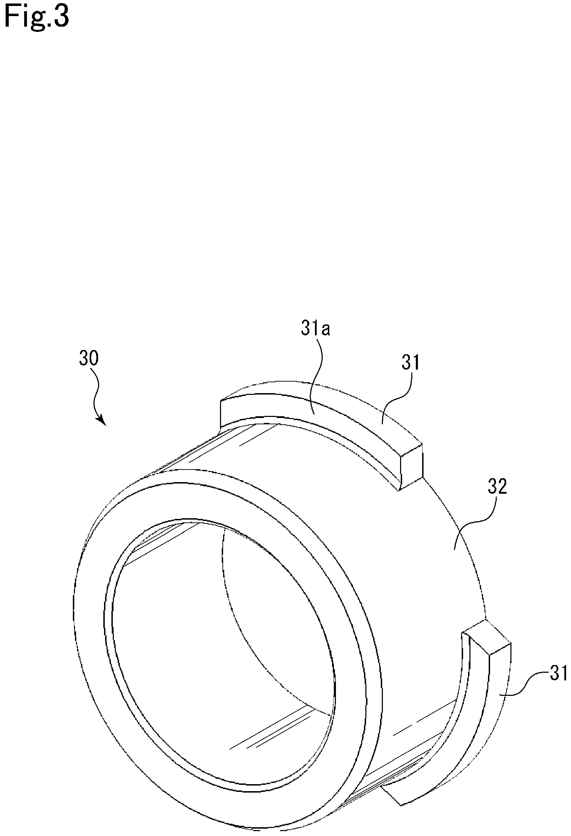

The end face of the mating ring 30 on the side of the seal ring 40 is formed as the sealing face 30a to which the sealing face 41a of an annular sealing projection 41 serving as a sealing face of the seal ring 40 is slidably and closely attached. In an end part of the mating ring 30 on the side of the seal ring 40, three flanges 31 provided with three cutouts 32 are provided at equal intervals in the circumferential direction so as to extend outward in the radial direction (FIG. 3).

On an end face of the seal ring 40 on the side of the mating ring 30, the annular sealing projection 41 projecting in the direction of the mating ring 30 is formed. The sealing face 41a of the sealing projection 41 is slidably and closely attached to the sealing face 30a of the mating ring 30. The seal ring 40 is formed by for example a carbon sealing material, and the mating ring 30 is formed by a hard sealing material having greater Young's modulus than the carbon sealing material (for example, ceramics such as SiC).

The O ring 80 is installed in the seal ring 40 in a state where the O ring is accommodated in an O ring installment recessed section 43 formed on an inner peripheral face of an end part of the seal ring 40 on the back face side (face on the opposite side to the mating ring 30). The spring holder 71 which is a metal plate is abutted with and arranged in a back surface of the seal ring 40, and an inner diameter part thereof extends so as to close the back of the O ring installment recessed section 43 of the seal ring 40. The case 60 which is a tripodal metal plate (for example, a stainless steel plate) is arranged on the back face side of the spring holder 71.

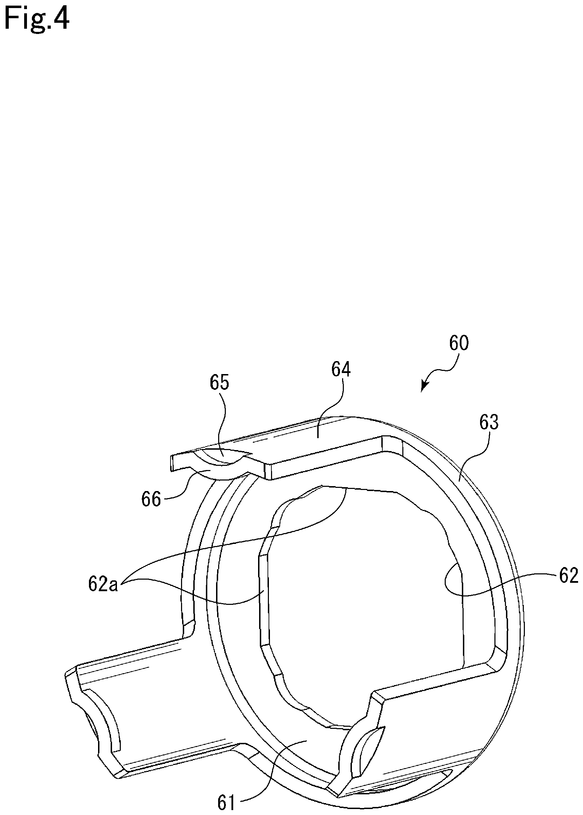

Referring to FIG. 4, the case 60 is formed by a brim shape bottom plate 61 having a fitting hole 62 in center, a rib 63 slightly extending from the bottom plate 61 in the axial direction (shorter than the coiled wave spring 70), three guide pieces 64 (guide member) extending from the rib 63 in the axial direction, and engagement projections 66 (engagement portions as holding means) on leading ends of the guide pieces 64. The engagement projections 66 on the leading ends of the guide pieces 64 are formed by pressing the guide pieces 64 inward in the radial direction. By pressing, recessed sections 65 are formed on the opposite side to the projecting direction of the engagement projections 66. The guide pieces 64 are formed at equal intervals in the circumferential direction, and engaged with cutouts 42 (FIG. 1) similarly formed on an outer peripheral face of the seal ring 40 at equal intervals. Thereby, the seal ring 40 is brought into a state where the seal ring is movable in the axial direction of the shaft 2 and into a state where the seal ring is immovable in the circumferential direction (rotating direction) (state where the seal ring is integrally rotated).

In order to assemble the mechanical seal device 3 shown in FIG. 1, the coiled wave spring 70, the spring holder 71, and the seal ring 40 in which the O ring 80 is installed are accommodated in the case 60 in order. In this state, the guide pieces 64 of the case 60 are matched with positions of the cutouts 32 of the mating ring 30, and pushed into the axial direction (direction in which the bottom plate 61 of the case 60 and the mating ring 30 come close to each other) against resilient force of the coiled wave spring 70. By rotating the case 60 by 60 degrees in the circumferential direction from a position where the engagement projections 66 exceed the flanges 31 (position where the engagement projections 66 and the flanges 31 are not overlapped when seen in the radial direction), engagement faces 66a (right faces) of the engagement projections 66 and engaged faces 31a (left faces) of the flanges 31 are abutted with each other, so that the mechanical seal device is assembled. A state before the mechanical seal device 3 shown in FIG. 1 is installed in the equipment is called as a holding state (or a pre-use state).

In a holding state, the engagement faces 66a of the engagement projections 66 and the engaged faces 31a of the flanges 31 are abutted with each other, and the coiled wave spring 70 is interposed in a state where the coiled wave spring 70 is compressed at holding length in the axial direction. Thereby, the seal ring 40 is biased to the mating ring 30 with holding pressure via the spring holder 71. That is, the seal ring 40 and the mating ring 30 are resiliently held between the coiled wave spring 70 and the engagement projections 66. The holding length is shorter than natural length of the coiled wave spring 70 and longer than use length of the coiled wave spring 70 in a use state of the mechanical seal device 3 shown in FIG. 2.

Next, a use state where the mechanical seal device 3 is installed in the equipment shown in FIG. 2 will be described. The mating ring 30 is fitted via a gasket 50 into an annular recessed section 12 formed by enlarging a diameter of an equipment interior side opening part of the axial hole 11 of the housing 1. The gasket 50 is formed by covering an inside metal ring 51 with a rubber member 52 by insert molding. The seal ring 40 is arranged on the equipment interior side of the mating ring 30, and fitted via the O ring 80 to an outer peripheral face of the shaft 2 movably in the axial direction.

By abutting an outer face (right face) of the bottom plate 61 of the case 60 with a first step section 21 of the shaft 2, the case 60 is locked in the axial direction of the shaft 2. The case 60 is formed in such a manner that flat sections 62a of the fitting hole 62 are engaged with cutout sections 26 formed in part of the first step section 21 of the shaft 2 (FIG. 4). Thereby, the case is fitted to the shaft 2 immovably in the circumferential direction with respect to the shaft 2, that is, to be rotated integrally with the shaft 2 in accordance with rotation of the shaft 2.

In the shaft 2, the first step section 21 in which the cutout sections 26 are formed is formed at a position to be engaged with the flat sections 62a of the case 60, and a second step section 22 is also formed at a position corresponding to an inner periphery of the seal ring 40. With the first step section 21 and the second step section 22 as borders, the shaft 2 is formed by a small diameter section 23 which is a part on the atmosphere side of the first step section 21, the small diameter section being inserted into the axial hole 11 of the housing 1 and an inner peripheral part of the mating ring 30, a middle diameter section 24 provided between the first step section 21 and the second step section 22, the second step section to which the seal ring 40 is fitted movably in the axial direction via the O ring 80, and a large diameter section 25 on the equipment interior side of the second step section 22. Thereby, the inner most diameter of the sealing faces 30a, 41a of the mating ring 30 and the seal ring 40 can be arranged on the inner diameter side of the innermost diameter of the seal ring 40 to which fluid pressure is applied, so that the mechanical seal device can be used as a balanced mechanical seal. The balanced mechanical seal indicates a mechanical seal in which a sealing face has an area of a part to which fluid pressure is not applied, so that a load of the fluid pressure to the sealing face can be reduced. (An unbalanced mechanical seal is another relating mechanical seal. This indicates a mechanical seal in which fluid pressure is applied to all over a sealing face, so that a load of the fluid pressure to the sealing face cannot be reduced.)

Axial length of the mechanical seal device 3 is shorter in a use state shown in FIG. 2 than in a holding state shown in FIG. 1 by L. The axial length of the mechanical seal device 3 is length between an outer end face of the gasket 50 (end face on the left side in FIGS. 1 and 2) and an outer end face of the case 60 (end face on the right side in FIGS. 1 and 2). Therefore, in a use state where the mechanical seal device 3 is installed in the equipment, the seal ring 40 is biased from the coiled wave spring 70 to the mating ring 30 with use pressure higher than holding pressure shown in FIG. 1. In a state shown in FIG. 2, the mating ring 30 and the case 60 are not engaged, so that the rotation of the shaft 2 is not prevented.

With such a configuration, bias force by the coiled wave spring 70 is given to the seal ring 40 in the axial direction of the shaft 2, and the sealing face 41a on a leading end of the sealing projection 41 is pushed onto the sealing face 30a of the mating ring 30 with proper use pressure. Rotation torque from the shaft 2 is given to the seal ring 40 via the case 60, so that the seal ring is rotated integrally with the shaft 2. As a result, in accordance with the rotation of the shaft 2, the sealing face 30a of the mating ring 30 and the sealing face 41a of the seal ring 40 slide on each other in a closely attached state, and the sealed fluid is sealed by contact of the sealing face 30a of the mating ring 30 and the sealing face 41a of the seal ring 40.

Not only in a use state where the mechanical seal device 3 is installed in the equipment (FIG. 1) but also in a pre-use state before the mechanical seal device is installed in the equipment (FIG. 2), the axially perpendicular sealing faces 30a, 41a of both the rings 30, 40 are in contact with each other with pressure based on the resilient force of the coiled wave spring 70. Thus, grit and dust coming into a part between the sealing face 30a of the mating ring 30 and the sealing face 41a of the seal ring 40 can be suppressed as far as possible.

The coiled wave spring 70 used in a use state is used as a resilient member that holds the axially perpendicular sealing faces 30a, 41a of both the rings 30, 40 brought into contact with each other in a pre-use state before the mechanical seal device is installed in the equipment. Thus, the part can be commonly used.

Movement of the mating ring 30 upon receiving the resilient force of the coiled wave spring 70 can be inhibited by the engagement projections 66. Therefore, at the time of assembling into the equipment, only by moving the case 60 upon receiving connection of the rotation shaft 2 from the axial direction, the mating ring 30 and the engagement projections 66 can be easily disengaged.

Between the gasket 50 and the flanges 31, a favorable refuge place for the engagement projections 66 provided inward in the radial direction can be ensured.

The flanges 31 and the engagement projections 66 can be detachably engaged by so-called bayonet engagement, and the mating ring 30 and the seal ring 40 can be assembled into a resilient state (holding state) by a simple procedure.

In the mechanical seal device 3, elements are integrated (unitized). Thus, handling is simplified and troublesomeness of a work at the time of installation and uninstallation can be resolved.

The flanges 31 are provided in the non-rotatably fixed mating ring 30. Thus, a configuration of the axially movable seal ring 40 non-rotatably fixed to the rotation shaft is not complicated anymore.

The guide pieces 64 are provided on the side of the rotating seal ring 40, and the guide pieces 64 are positioned on the radially outer side of the sealing faces 30a, 41a of the mating ring 30 and the seal ring 40. Therefore, at the time of use, a circumferential flow in accordance with rotation of the guide pieces 64 is generated on the outer side of the sealing faces 30a, 41a. The circumferential flow becomes a so-called fluid curtain, so that a radical pressure change of the sealed fluid or the like can be suppressed from acting on the sealing faces 30a, 41a.

The embodiment of the present invention is described above with the drawings. However, specific configurations are not limited to the embodiment but modifications and additions that are made within the range not departing from the scope of the present invention are also included in the present invention, the latter being only limited by the scope of the appended claims.

For example, in the above embodiment, the rotating type mechanical seal device is described as the mechanical seal device 3. However, a stationary type mechanical seal device may be adopted. For example, engaged sections such as flanges may be provided on the side of a mating ring non-rotatably fixed to a rotation shaft, and engagement sections to be engaged with the engaged sections may be provided on the side of a seal ring fixed to a housing via a spring. In this case, since guide pieces on the rotation side can be shortened, the rotation side can be downsized.

As a holding member that resiliently holds the seal ring 40 and the mating ring 30, the engagement projections 66 provided in the guide pieces 64 of the case 60 are described.

The mechanical seal device may include a mating ring having an axially perpendicular sealing face, an axially movable seal ring having an axially perpendicular sealing face to be brought into contact with the sealing face of the mating ring, a guide member that guides the seal ring in the axial direction, and a resilient member that presses the seal ring to the side of the mating ring, and the seal ring and the mating ring may be resiliently held between the resilient member and a holding means. Not only in a use state where the mechanical seal device is installed in the equipment but also in a pre-use state before the mechanical seal device is installed in the equipment, the axially perpendicular sealing faces of both the rings are in contact with each other with pressure based on resilient force of the resilient member. Thus, grit and dust coming into a part between the sealing face of the mating ring and the sealing face of the seal ring can be suppressed as far as possible.

A case where the equipment in which the mechanical seal device 3 is used is an automobile air conditioning compressor is described above. However, the mechanical seal device may be used in any kind of equipment.

### {REFERENCE SIGNS LIST}

- 1: Housing (equipment)
- 2: Shaft (equipment, rotation shaft)
- 3: Mechanical seal device
- 30: Mating ring
- 30a: Sealing face
- 31: Flange
- 32: Cutout part
- 40: Seal ring
- 41: Sealing projection
- 41a: Sealing face
- 60: Case
- 61: Bottom plate
- 63: Rib
- 64: Guide piece (guide member)
- 66: Engagement projection (engagement portion)
- 66a: Engagement face
- 70: Coiled wave spring (resilient member)
- A: Atmosphere side space
- P: Device interior side space

## Claims

1. A mechanical seal device (3) comprising:
a mating ring (30) having an axially perpendicular sealing face (30a) and having a flange (31) projecting in a radial direction;
an axially movable seal ring (40) having an axially perpendicular sealing face (41a) to be brought into contact with the sealing face (30a) of the mating ring (30);
a resilient member (70) that presses the seal ring (40) to a side of the mating ring (30); and
a case (60) inside which the seal ring (40) and the resilient member (70) are accommodated, wherein
a fluid is sealed by bringing the axially perpendicular sealing faces (30a, 41a) of both the rings into contact with each other and relatively rotating the sealing faces (30a, 41a); and
**characterized in that** the case (60) has guide pieces (64) projecting on the side of the mating ring (30) in the axial direction;
the seal ring (40) has cutouts (42) on an outer face; and
by engaging the guide pieces (64) with the cutouts (42), the seal ring (40) is incapable of being relatively rotated with respect to the case (60),
wherein the guide pieces (64) each have an engagement portion (66) projecting in the radial direction, and are resiliently held by engaging the engagement portions (66) with the flange (31) of the mating ring (30), and
wherein in the flange (31), cutouts (32) having such widths that the engagement portions (66) are capable of passing through are formed in a circumferential direction of the flange (31), and
wherein the seal ring (40) and the mating ring (30) are resiliently held by
a) matching the guide pieces (64) with positions of the cutouts (32) of the mating ring (30),
b) pushing the guide pieces (64) into the axial direction against a resilient force of the resilient member (70),
c) rotating the case (60) in the circumferential direction from a position where the engagement portions (66) exceed the flange (31), and
d) engaging the engagement portions (66) and the flange (31) with each other.

2. The mechanical seal device as set forth in claim 1, **characterized in that**:
when the case (60) is connected to a rotation shaft (2), the flange (31) and the engagement portions (66) are disengaged from each other.

## Patentansprüche

1. Mechanische Dichtungsvorrichtung (3), welche aufweist:
einen Anschlussring (30), der eine axial senkrechte Dichtfläche (30a) hat und einen Flansch (31) hat, der in einer radialen Richtung auskragt;
einen axial bewegbaren Dichtungsring (40), der eine axial senkrechte Dichtfläche (41a) hat, um in Kontakt mit der Dichtfläche (30a) des Anschlussrings (30) gebracht zu werden;
ein elastisches Element (70), das den Dichtungsring (40) an eine Seite des Anschlussrings (30) drückt; und
ein Gehäuse (60), in dem der Dichtungsring (40) und das elastische Element (70) untergebracht sind, wobei
ein Fluid abgedichtet ist, indem die axial senkrechten Dichtflächen (30a, 41a) beider Ringe in Kontakt miteinander gebracht werden und die Dichtflächen (30a, 41a) relativ zueinander rotiert werden; und
**dadurch gekennzeichnet, dass** das Gehäuse (60) Führungsstücke (64) hat, die an der Seite des Anschlussrings (30) in der axialen Richtung auskragen; der Dichtungsring (40) Ausschnitte (42) an einer Außenfläche hat; und
der Dichtungsring (4) unfähig ist, relativ bezüglich des Gehäuses (60) rotiert zu werden, indem die Führungsstücke (64) mit den Ausschnitten (42) in Eingriff gebracht werden,
wobei die Führungsstücke (64) jeweils einen Eingriffsabschnitt (66) haben, der in der radialen Richtung auskragt, und elastisch durch Eingriff der Eingriffsabschnitte (66) in den Flansch (31) des Anschlussrings (30) gehalten werden, und
wobei in dem Flansch (31) Ausschnitte (32) in einer umfänglichen Richtung des Flanschs (31) gebildet sind, die solche Breiten haben, dass die Eingriffsabschnitte (66) durchgehen können, und
wobei der Dichtungsring (40) und der Anschlussring (30) elastisch gehalten werden, indem
a) die Führungsstücke (64) mit Positionen der Ausschnitte (32) des Anschlussrings (30) gepaart werden,
b) die Führungsstücke (64) in der axialen Richtung gegen eine Federkraft des elastischen Elements (70) gedrückt werden,
c) das Gehäuse (60) in der umfänglichen Richtung von einer Position, in der die Eingriffsabschnitte (66) den Flansch (31) überschreiten, rotiert wird, und
d) die Eingriffsabschnitte (66) und der Flansch (31) miteinander in Eingriff gebracht werden.

2. Mechanische Dichtungsvorrichtung gemäß Anspruch 1, **dadurch gekennzeichnet, dass**:
der Flansch (31) und die Eingriffsabschnitte (66) voneinander getrennt werden, wenn das Gehäuse (60) mit einer Rotationswelle (2) verbunden ist.

## Revendications

1. Dispositif de garniture mécanique (3) comprenant :
une bague d'accouplement (30) ayant une face d'étanchéité axialement perpendiculaire (30a) et ayant une bride (31) faisant saillie dans une direction radiale ;
une bague d'étanchéité mobile axialement (40) ayant une face d'étanchéité axialement perpendiculaire (41a) destinée à être mise en contact avec la face d'étanchéité (30a) de la bague d'accouplement (30) ;
un élément élastique (70) qui presse la bague d'étanchéité (40) sur un côté de la bague d'accouplement (30) ; et
un boîtier (60) à l'intérieur duquel la bague d'étanchéité (40) et l'élément élastique (70) sont logés, dans lequel
un fluide est scellé en mettant en contact les faces d'étanchéité axialement perpendiculaires (30a, 41a) des deux bagues et en faisant tourner les faces d'étanchéité (30a, 41a) l'une par rapport à l'autre ; et
**caractérisé en ce que** le boîtier (60) présente des pièces de guidage (64) faisant saillie sur le côté de la bague d'accouplement (30) dans la direction axiale ;
la bague d'étanchéité (40) présente des découpes (42) sur une face extérieure ; et
en engageant les pièces de guidage (64) dans les découpes (42), la bague d'étanchéité (40) ne peut pas être tournée relativement par rapport au boîtier (60), dans lequel les pièces de guidage (64) présentent chacune une partie d'engagement (66) faisant saillie dans la direction radiale et sont maintenues de manière élastique en engageant les parties d'engagement (66) avec la bride (31) de la bague d'accouplement (30), et
dans lequel, dans la bride (31), des découpes (32) ayant des largeurs telles que les parties d'engagement (66) sont capables de passer à travers sont formées dans une direction circonférentielle de la bride (31), et
dans lequel la bague d'étanchéité (40) et la bague d'accouplement (30) sont maintenues élastiquement
a) en faisant correspondre les pièces de guidage (64) avec les positions des découpes (32) de la bague d'accouplement (30),
b) en poussant les pièces de guidage (64) dans la direction axiale contre une force élastique de l'élément élastique (70),
c) en faisant tourner le boîtier (60) dans la direction circonférentielle à partir d'une position dans laquelle les parties d'engagement (66) dépassent la bride (31), et
d) en engageant mutuellement les parties d'engagement (66) et la bride (31).

2. Dispositif de garniture mécanique selon la revendication 1, **caractérisé en ce que** :
lorsque le boîtier (60) est relié à un arbre de rotation (2), la bride (31) et les parties d'engagement (66) sont mutuellement désengagées.
